# EUROPÄISCHE PATENTSCHRIFT

(11) **EP 2 323 906 B1**
(45) Veröffentlichungstag und Bekanntmachung des Hinweises auf die Patenterteilung: **25.06.2014**
(21) Anmeldenummer: 09736376.6
(22) Anmeldetag: 15.09.2009
(51) Int. Cl.: C09J 175/08, B64C 3/26, B64C 1/12, A63H 27/00, C09J 5/06, C08G 18/50

(54) **VERFAHREN ZUM BESPANNEN VON LEICHTFLUGZEUGEN**
METHOD FOR COVERING LIGHT AIRCRAFT
PROCÉDÉ D'ENTOILAGE D'AVIONS LÉGERS

(30) Priorität: 18.09.2008 DE 102008048400
(43) Veröffentlichungstag der Anmeldung: 25.05.2011
(73) Patentinhaber: Lanitz, Siegfried, 04178 Leipzig (DE)
(72) Erfinder: Lanitz, Siegfried, 04178 Leipzig (DE)
(74) Vertreter: Boeckh, Tobias
(86) Internationale Anmeldenummer: PCT/EP2009/006923
(87) Internationale Veröffentlichungsnummer: WO 2010/031591

(56) Entgegenhaltungen:
- EP-A1- 1 288 124
- EP-A1- 1 997 953
- WO-A1-2008/138331
- DE-A1- 4 439 031
- GB-A- 2 215 746
- US-A- 3 841 942
- US-A- 4 225 372

## Beschreibung

Die Erfindung betrifft ein Verfahren zum Bespannen von Leichtflugzeugen und/oder Teilen davon mit einem Polyester-Bespanngewebe sowie die Verwendung eines Dispersionsheiß-klebers zur Bespannung. Die Erfindung betrifft außerdem ein Leichtflugzeug oder Teile desselben, welche mit einem Polyester-Bespanngewebe mittels des erfindungsgemäßen Verfahrens bespannt ist.

Systeme und Materialien zum Bespannen von Leichtflugzeugen, bzw. Modellflugzeugen, sind im Stand der Technik bekannt. So beschreibt z.B. EP 0 737 132 B1 ein bügelbares, einfach zu handhabendes Polyesterbespanngewebe, das aus einem polymerisierten Mehrschichtsystem besteht, das auf einem speziell für den Einsatz als Bespanngewebe für Leichtflugzeuge entwickelten Polyestergewebe aufgebracht ist. Da das Gewebe endvergütet ist, muss es nach dem Aufbringen nicht mehr lackiert werden. Wenn dies jedoch gewünscht ist, z.B. aus Gründen der visuellen Gestaltung der Oberfläche, kann das Gewebe dennoch problemlos überlackiert werden.

Des weiteren ist aus Dokument GB 2 215 746, welches den nächstliegenden Stand der Technik darstellt, ein Verfahren zum Bespannen von Leichtflugzeugen und/oder Teilen davon bekannt, bestehend aus einem Rahmensystem, wobei der Rahmen oder Teile des Rahmens mit einem Polyester-Bespanngewebe umspannt werden, wobei das Bespanngewebe im Bereich seiner Überhänge und Teile des Rahmens, auf denen das Bespanngewebe zu liegen kommt, mit einem Dispersionsheißkleber bestrichen werden, wobei der Kleber eine Härterkomponente enthält, die nach Erreichen der Verarbeitungstemperatur von > 40°C auspolymerisiert.

Die Strukturen, aus denen die zu bespannenden Flugzeuge aufgebaut sind, sind sehr verschieden und bestehen aus so unterschiedlichen Materialien wie Aluminium, Stahl, Holz, Glasfaserkunststoff oder kohlenstofffaserverstärkter Kunststoff. Dementsprechend sind auch die Verarbeitungsbedingungen wie z.B. die Temperatur für das verwendete Bespanngewebe sehr verschieden. Ein Nachteil der Systeme zum Bespannen von Leichtflugzeugen aus dem Stand der Technik besteht darin, dass dieses Procedere sehr aufwändig ist. D. h. die Bespannung wird mit Klebelack aufgezogen, der vorher in mehreren Schichten auf die zu bespannende Struktur aufgebracht wurde. Der Bespannstoff wird dann mit Lösemitteln (z. B. Azeton) getränkt, die den Klebelack aufweichen. Anschließend wird er in den aufgeweichten Klebelack gedrückt. Nach dem Trocknen wird der Bespannstoff mit Heißluft ge-strafft. Anschließend erfolgen ca. 5 - 10 Anstriche mit Spannlack, bei denen gegebenenfalls zwischendurch nachgeschliffen werden muss. Es ist dabei tunlichst darauf zu achten, dass sich keine Tropfnasen bilden. Dem letzten Spannlackanstrich wird fachgemäß Alupulver beigemischt, um eine UV-Blockung zu erzielen. Danach folgen 1 - 3 Decklackanstriche. Abschließend kann das Ganze dann noch mit einem Klarlack versiegelt werden. Bei allen Flugzeugkonstruktionen ist diese Arbeit mit einem sehr hohen Stundenaufwand verbunden und bei Beschädigungen kann nicht einfach ein Stück übergebügelt werden, sondern die ganze Bespann- und Lackierungsprozedur muss auch bei einer Reparatur erneut durchgeführt werden.

Ausgehend von diesem Stand der Technik ergibt sich für die vorliegende Erfindung die Aufgabe, ein Verfahren bereitzustellen, mit dem Leichtflugzeuge und/oder Teile davon zuverlässig bespannt werden können, wobei die Präzision der Bespannung, ihre Langlebigkeit sowie der Materialaufwand und damit die Kosten für die Bespannung bei jeder Struktur und Materialbeschaffenheit des zu bespannenden Leichtflugzeuges gleich bleibend sind.

Gelöst wird diese Aufgabe durch das erfindungsgemäße Verfahren der Ansprüche. Demnach betrifft die Erfindung in einer ersten Ausführungsform ein Verfahren zum Bespannen von Leichtflugzeugen und/oder Teilen davon, bestehend aus einem Rahmensystem, wobei der Rahmen oder Teile des Rahmens mit einem Polyester-Bespanngewebe umspannt werden, wobei das Bespanngewebe eine Längs-Schrumpfung von 5 - 8%, bevorzugt 7% und eine Quer-Schrumpfung von 4 - 6%, bevorzugt 5% bei 160 - 180°C aufweist, umfassend die folgenden Verfahrensschritte,
a) wobei das Bespanngewebe im Bereich seiner Überhänge und Teile des Rahmes, auf denen das Bespanngewebe zu liegen kommt, mit einem Dispersionsheißkleber bestrichen werden, wobei der Kleber eine Härterkomponente enthält, die nach Erreichen der Verarbeitungstemperatur von > 40°C auspolymerisiert, und
b) wobei das Bespanngewebe um Holmenteile des Rahmens derart verwickelt ist, dass bei einer Lösung der durch den Kleber hergestellten Verbindung zwischen Bespanngewebe und Rahmen das Bespanngewebe am Rahmengestell gehalten wird.

Ein Leichtflugzeug im Sinne der Erfindung können Rahmensysteme z.B. aus Holz, Aluminium, Stahl, Glasfaserkunststoffe oder kohlenstofffaserverstärkte Kunststoffe bestehen.

Teile eines Leichtflugzeugs sind beispielsweise dessen Tragflächen, Leitwerke, Nasenholme, Endholme, Haupthome, Ruderholme, Rippen, Querruder oder der Rumpf.

Bevorzugt ist die Verwendung von luftundurchlässigem Bespanngewebe, da dies zu besonders vorteilhaften Eigenschaften während des Fliegens führt.

Durch die erfindungsgemäße Art der Verwickelung zieht sich die Bespannung "von selbst" fest, auch wenn sich der Kleber lösen würde. Damit wird eine Lockerung des Bespanngewebes verhindert. Ein mögliches Flattern des Gewebes ist ausgeschlossen. Das Verfahren führt somit zu einer erhöhten Sicherheit und ist daher vorteilhaft im Vergleich zu den Verfahren im Stand der Technik.

Das Verfahren zur Bespannung ist bevorzugt dadurch gekennzeichnet, dass zunächst das Bespanngewebe dergestalt zugeschnitten wird, dass die Form des Gewebestückes der Grundform des zu bespannenden Flugzeugteils entspricht, wobei an jeder Begrenzungslinie ein Überhang stehengelassen wird, der zur späteren Befestigung des Gewebes an dem Flugzeugteil dient. Anschließend wird das Bespanngewebe auf seiner Innenseite in dem Bereich mit einem Dispersionsheißkleber bestrichen, der auf der Struktur des Flugzeuges zu verkleben ist. Auch die Struktur wird im zu bespannenden Bereich mit dem Dispersionsheißkleber bestrichen. Der Dispersionsheißkleber enthält eine integrierte Härterkomponente, die bereits bei relativ niedrigen Temperaturen von 40°C freigesetzt wird und den Kleber polymerisieren lässt. Bevorzugt polymerisiert der Kleber bei Temperaturen > 40°C aus, besonders bevorzugt bei 40 - 60°C. Eine relativ niedrige Verarbeitungstemperatur hat den Vorteil, dass das Verfahren schonender für das Bespanngewebe ist und dass eine vollständigere Polymerisation erreicht werden kann.

Der Vorteil des Dispersionsklebers der Erfindung ist, dass dieser durch Wärmezufuhr nicht nur verklebt, sondern auch polymerisiert also vernetzt. Dadurch entsteht eine temperaturstabile Verklebung.

Bei Metallkonstruktionen sollten falls nötig vor der Bespannung alle Grate abgeschliffen werden, um das Bespanngewebe nicht zu beschädigen. Außerdem hat sich hat es sich als vorteilhaft herausgestellt, die Metalloberfläche vor der Bespannung zu entfetten, da dies zu einer verbesserten Haftung des Klebers führt.

Bei Aluminiumkonstruktionen kann vor dem Auftragen des Dispersionsheißklebers ein temperaturstabiler Haftlack für Aluminiumkonstruktionen aufgebracht werden. Bei Stahlkonstruktionen kann bevorzugter Weise vor dem Bespannen ein temperaturstabiler Primer aufgebracht werden.

Bevorzugt ist das Verfahren zum Bespannen von Leichtflugzeugen und/oder Teilen davon, wobei der Dispersionsheißkieber 80 - 88% Bindemittel, 12 - 15% Härterkomponente und 0,15 - 0,3% Verdicker umfasst.

Unter den Prozentangaben im Sinne der Erfindung sind Gewichtsprozent zu verstehen.

Bevorzugt umfasst das Bindemittel eine lineare bis schwach verzweigte Polyurethan-Dispersion. Bevorzugt ist außerdem ein Verdicker auf Polyurethan-Basis, besonders bevorzugt ist der Verdicker nichtionogen.

In einer vorteilhaften Ausführungsform umfasst die Härterkomponente 54 - 60% Lösungsmittel, 0,35 - 0,5% Stabilisierungsmittel auf Basis eines Natriumsalzes der Naphtalensulfonsäure, 0,25 - 0,35% Emulgator auf Basis eines propoxyliertem Alkohol, 1,7 - 1,9% Härter auf Basis eines Polyetheramines und 37 - 41% Polyisocyanat.

Bevorzugt wird Wasser als Lösungsmittel verwendet. Das Stabilisierungsmittel auf Basis eines Natriumsalzes der Naphtalensulfonsäure kann z.B. Tamol NN 4501 sein. Als Emulgator kann Emulgator FD verwendet werden. Der Härter auf Basis eines Polyetheramines kann beispielsweise Jeffamine T403 sein. Bevorzugt ist ein aliphatisches Polyisocyanat, z.B. Desmodur LPBUEJ471.

Es ist vorteilhaft, dass zuerst die Unterseite des Flugzeugteils eingetucht wird, indem zunächst das vordere, in Flugrichtung liegende Ende mit dem mit Kleber bestrichenen Teil des Bespanngewebes umschlungen und dieser Teil mit einem geeigneten Werkzeug angebügelt wird. Anschließend wird das hintere Ende des Flugzeugteils mit einem Teil des Bespanngewebes umschlungen, der ebenso wie im Falle des vorderen Endes mit Kleber bestrichenen ist. Anschließend wird dieser Teil in derselben Weise wie das vordere Ende angebügelt.

Als nächster Schritt wird die Oberseite des Flugzeugteils eingetucht, wieder beginnend am vorderen, in Flugrichtung liegenden Ende, das mit dem, mit Kleber bestrichenen Teil des Bespanngewebes umschlungen wird, wonach das Bespanngewebe angebügelt wird, während auch hier das hintere Ende des Flugzeugteils anschließend mit dem ebenso mit Kleber bestrichenen Teil des Bespanngewebes umschlungen und das Bespanngewebe in derselben Weise angebügelt wird.

In einer weiteren Ausführungsform betrifft die Erfindung das Verfahren zum Bespannen von Leichtflugzeugen und/oder Teilen davon, dadurch gekennzeichnet, dass
a) für die Bespannung von Leitwerken das Bespanngewebe dergestalt zugeschnitten wird, dass der Überhang (A) der Schnittkante zum Nasenholm des zu bespannenden Leitwerkes (A = π · d · x) beträgt sowie (A π · d · y) vom Endholm desselben Leitwerkes, wobei d der Durchmesser des mit Bespanngewebe zu umschlingenden Rohres (in cm) ist, und x = 1,5 bis 2,0, bevorzugt 1,75 und y = 0,55 bis 1,05, bevorzugt 0,8 und
b) die Unterseite des Leitwerkes eingetucht wird, indem der Nasenholm mit etwa 1,75 Umrundungen (550° bis 700°) des mit Kleber bestrichenen Teils des Bespanngewebes umschlungen und dieser Teil angebügelt wird und anschließend der Endholm mit einer etwa 0,75 Umrundung (200° bis 350°) des ebenso mit Kleber bestrichenen Teils des Bespanngewebes umschlungen und dieser Teil in derselben Weise angebügelt wird, gefolgt vom
c) Eintuchen der Oberseite des Leitwerkes, indem der Nasenholm, etwa mit 0,5 Umrundung (150° bis 210°) des mit Kleber bestrichenen Teils des Bespanngewebes umschlungen wird, und das Bespanngewebe angebügelt wird, während der Endholm anschließend mit weniger als 0,5 Umrundung (120° bis 170°) des ebenso mit Kleber bestrichenen Teils des Bespanngewebes umschlungen und das Bespanngewebe in derselben Weise angebügelt wird.

Durch diese Art der Umschlingung zieht sich die Bespannung "von selbst" fest und garantiert dadurch auch dann Halt wenn sich der Kleber lösen würde. Dadurch wird ein hohes Maß an Sicherheit und Haltbarkeit gewährleistet.

Bevorzugt wird zunächst die Oberseite des Leitwerkes eingetucht. Hierfür wird zunächst der Nasenholm mit 0,5 Umrundung (150° bis 210°, bevorzugt 180°) des Bespanngewebes umschlungen, wobei der umschlingende Teil wie beim Eintuchen der Unterseite mit Kleber bestrichen ist. Danach wird das Bespanngewebe angebügelt, während der Endholm anschließend mit weniger als 0,5 Umrundung (150° bis 210°, bevorzugt 180°) des ebenfalls mit Kleber bestrichenen Teils des Bespanngewebes umschlungen und das Bespanngewebe in derselben Weise angebügelt wird. Diese Anzahl von Umschlingungen sorgt vorteilhafter Weise für eine hohe Stabilität der Bespannung, ohne dabei das aerodynamische Verhalten der bespannten Flugzeugteile durch lokale Verdickungen negativ zu beeinflussen.

In einer weiteren bevorzugten Ausführungsform des erfindungsgemäßen Verfahrens wird bei der Bespannung von Seitenleitwerken die linke Seite zuerst eingetucht und beim Eintuchen der rechten Seite das Bespanngewebe mit weniger als 0,5 Umrundung (110° bis 160°, bevorzugt 144°) um den Nasen- und den Endholm geschlungen, wobei die Überlappung an den Holmen nicht in die Luftströmung hineinragt. Diese Ausführungsform sorgt auch bei den Seitenleitwerken für eine stabile Bespannung, welche der teils erheblichen, Luftstrom-induzierten mechanischen Belastung an diesen Bauteilen standhält.

In einer weiteren bevorzugten Ausführungsform des erfindungsgemäßen Verfahrens werden bei der Bespannung des Rumpfes zunächst alle Kontaktflächen zwischen Bespanngewebe und Fahrwerk mit dem Dispersionsheißkleber bestrichen und anschließend wird bevorzugt in der Reihenfolge Unterseite - rechte Seite - linke Seite - Oberseite der Rumpf eingetucht. Das Einhalten dieser Reihenfolge gewährleistet, dass sich auch schwer zugängliche Stellen gut bearbeiten lassen. Vorteilhafter Weise besteht die Rumpfbespannung aus möglichst wenigen Einzelteilen, da dies die Anzahl der Stöße und Nähte reduziert.

In einer weiteren bevorzugten Ausführungsform des erfindungsgemäßen Verfahrens wird vor dem Anbügeln der rechten Rumpfbespannung, auf welche die Rumpfstruktur bereits übertragen und der Kleber aufgetragen wurde, die linke Rumpfbespannung am Rumpf fixiert. Durch diese Vorgehen lässt sich die Rumpfstruktur auf die Innenseite der Bespannung übertragen, wo dann der Kleber bereits auftragen werden kann, was eine exakte und gleichartige Aufbringung des Bespanngewebes auf beiden Rumpfseiten ermöglicht.

In einer bevorzugten Ausführungsform wird das Bespanngewebe anschließend geschrumpft, indem es ein- bis zweimal mittels eines Heißluftgebläses bei einer Temperatureinstellung von 280°C bis 380°C, bevorzugt 350°C auf etwa 200°C erhitzt wird, wobei die tatsächliche Temperatur am Gewebe über den Abstand des Gebläses gesteuert wird. Es ist bevorzugt dass der Bespannvorgang mit dieser thermoinduzierten Schrumpfung des Bespanngewebes abgeschlossen wird. Wo keine Schrumpfung erforderlich ist, wird das Gewebe lediglich angebügelt, so dass es durch den auspolymerisierten Kleber befestigt ist. Mit diesem Verfahren werden zum einen Falten beseitigt, zum anderen verleiht die Schrumpfung der Folie Stabilität. Dieses Verfahren spart erheblich Zeit und schont die Umwelt, da keine Lösemittel zum Einsatz kommen. Weiterhin ist der Gewichtszuwachs des Flugzeuges durch diese Bespannung um 10 - 20 kg geringer als mit herkömmlicher Bespanntechnik.

In einer weiteren Ausführungsform werden vor dem Eintuchen Patches ebenfalls mit dem Dispersionsheißkleber bestrichen und nach dessen Trocknung zum Schutz des abschließenden Bespanngewebes auf Nieten und Knotenbleche aufgebügelt. Patches im Sinne der Erfindung sind kleine zusätzliche Stücke des Bespanngewebes. Vorteilhafterweise führt die Verwendung von Patches zum Schutz des abschließenden Bespanngewebes vor Beschädigungen durch das Scheuern an derartigen scharfkantigen Bereichen. Dadurch wird eine längere Haltbarkeit und eine erhöhte Sicherheit gewährleistet.

In einer weiteren bevorzugten Ausführungsform erfolgt das Anbügeln von Bespanngewebe und/oder der Patches bei Holzkonstruktionen mit einer Temperatur von 70°C bis 110°C. Besonders vorteilhaft ist die Verwendung einer Temperatur von 90°C. Bei Metallkonstruktionen erfolgt das Anbügeln von Bespanngewebe und/oder der Patches bevorzugt mit einer Temperatur von etwa 130°C bis 170°C. Auf diese Weise wird gewährleistet, dass der Dispersionsheißkleber aushärtet, ohne das das Bespanngewebe bereits geschrumpft wird. Da Metalle grundsätzlich gute Wärmeleiter sind und daher relativ schnell viel Wärme abziehen, können hier etwas höhere Temperaturen verwendet werden.

Außerdem bevorzugt ist das Verfahren, dadurch gekennzeichnet, dass erforderliche Nähte mit einem Zackenband aus Bespanngewebe versiegelt werden, das mit einem Dispersionsheißkleber gemäß einem der vorhergehenden Ansprüche bestrichen ist und anschließend bei 60°C bis 100°C, bevorzugt 90°C auf die Naht aufgebügelt wird. Bevorzugt werden die Nähte mit Dispersionsheißkleber in 4 mm-Unterbreite zum Zackenband beschichtet. Die Versiegelung erhöht die Festigkeit und Dauerhaftigkeit der Nähte und damit der gesamten Bespannung erheblich. Darüber hinaus wird die Oberfläche von Rumpf und Tragflächen so gegen das Eindringen von Feuchtigkeit geschützt. Ob eine Bespannung vernäht werden muss, hängt von der baulich konstruktiven Auslegung ab.

In einer weiteren bevorzugten Ausführungsform des erfindungsgemäßen Verfahrens erfolgt eine optional aufzubringende Beschriftung der bespannten Flächen mit Polyester-Farbfolie mittels Kaltverklebung und Nachbügeln bei 80°C. Bevorzugt ist die Polyester-Farbfolie dimensionsstabil, temperaturfest und/oder kraftstofffest. Das auf diese Weise erreichte, dauerhafte und individuelle Finish der Flugzeugoberfläche ist einfach anzubringen, wobei die Kaltverklebung eine ungewollte Verformung der vorhandenen Bespannung verhindert.

In einer weiteren bevorzugten Ausführungsform betrifft die Erfindung die Verwendung eines Dispersionsheißkleber zum Bespannen von Leichtflugzeugen und/oder Teilen davon umfassend Dispersionsheißkleber 80 - 88% Bindemittel, 12 - 15% Härterkomponente und 0,15 - 0,3% Verdicker, wobei der Kleber bei Temperaturen von > 40°C auspolymerisiert.

Bevorzugt umfasst das Bindemittel eine lineare bis schwach verzweigte Polyurethan-Dispersion. Bevorzugt ist außerdem ein Verdicker auf Polyurethan-Basis, besonders bevorzugt ist der Verdicker nichtionogen.

Des Weiteren ist ein Dispersionsheißkleber bevorzugt, wobei die Härterkomponente 54 - 60% Lösungsmittel, 0,35 - 0,5% Stabilisierungsmittel auf Basis eines Natriumsalzes der Naphtalensulfonsäure, 0,25 - 0,35% Emulgator auf Basis eines propoxyliertem Alkohol, 1,7 - 1,9% Härter auf Basis eines Polyetheramines, 37 - 41% Polyisocyanat umfasst.

Bevorzugt wird Wasser als Lösungsmittel verwendet. Das Stabilisierungsmittel auf Basis eines Natriumsalzes der Naphtalensulfonsäure kann z.B. Tamol NN 4501 sein. Als Emulgator kann Emulgator FD verwendet werden. Der Härter auf Basis eines Polyetheramines kann beispielsweise Jeffamine T403 sein. Bevorzugt ist ein aliphatisches Polyisocyanat, z.B. Desmodur LPBUEJ471.

Der erfindungsgemäße Kleber ist besonders vorteilhaft für die Verwendung in dem erfindungsgemäßen Verfahren, da der Kleber temperaturstabil ist und sich daher beim Bügeln des Bespanngewebes nicht löst. Der Kleber ist für alle Leichtflugzeugmaterialen gut geeignet und zeichnet sich durch eine besonders gute Haltbarkeit aus.

Eine weitere Ausführungsform der Erfindung betrifft ein Leichtflugzeug oder ein Teil desselben, dadurch gekennzeichnet dass dieses mit einem Polyester-Bespanngewebe mittels des erfindungsgemäßen Verfahrens bespannt ist.

### Beispiele

### Ausführungsbeispiel 1:

### Bespannen von Leitwerken

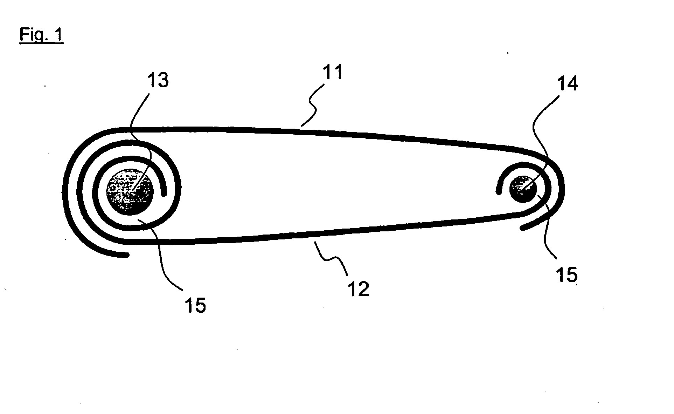

Nach dem Positionieren des Leitwerks wird die gesamte Rahmenkonstruktion mit einem Bleistift auf der Innen- und Außenseite der Struktur umrundet, sodass die komplette Kontur des Leitwerks auf die Innenseite des Bespanngewebes übertragen wird. Zu diesem Zeitpunkt werden die Übertragungen, sowohl für die Oberseite, als auch für die Unterseite gemacht. Die Unterseite ist die Seite, die zuerst bespannt wird, und bei der der Nasenholm in einem Winkel von 630° vom Gewebe eingetucht wird (Fig. 1).

Die ersten 270° der inneren Umschließung des Gewebes erhalten nach dem Anbügeln zusätzlich eine Kleberbeschichtung auf die Außenseite, um eine optimale Verklebung zu gewährleisten. Um die Zuschnittlinie für das Leitwerk aufzuzeichnen wird zusätzlich eine zweite Linie als äußere Zuschnittlinie gezogen. Der Abstand von dieser Zuschnittlinie zur Grundlinie wird beim Nasenholm gemäß folgender Formel berechnet:

### Beispiel: Durchmesser (Nasenholm) = 5 cm

π· d (cm) · 1,75 = 3,14 · 5cm · 1,75 = 27,5 cm

Die Zugabe für die vordere Zuschnittkante beträgt demnach 27,5 cm.

Für die Gewebezugabe am Endholm gilt folgende Formel:

### Beispiel: Durchmesser (Endholm) = 2 cm

π· d (cm) · 0,8 = 3,14 · 2cm - 0,8 = 5 cm

Die Zugabe für die hintere Zuschnittkante beträgt demnach 5 cm.

Der auf dem Gewebe markierte Bereich von der äußeren Zuschnittlinie bis zur Linie des hinteren Endes des Holmes, sowie die Bereiche, die von Stegen und Gurten abgedeckt werden, werden nun mit Dispersionsheißkleber eingestrichen. Nach dem Trocknen des Klebers wird das Gewebe zugeschnitten. Dort, wo bei der Umschlingung Stege oder Rippen sind, wird der Bereich von Stegen und Rippen eingeschnitten. Die durch das Einschneiden entstehenden Streifen können als "Patch" auf die Rippe oder den Steg aufgebügelt werden.

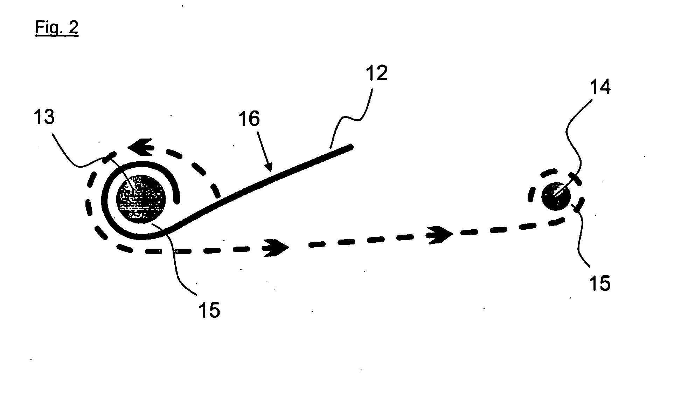

Der Bespannvorgang beginnt am Nasenholm und wird dann zum Endholm hin fortgesetzt. Dazu umschlingt das zu bespannende Gewebe den Nasenholm um knapp 360° (Fig. 2). Jetzt kann mit dem Bügeln des Gewebes an den Innenseiten des Nasenholmes begonnen werden. Der Einfachheit halber beginnt man immer an den geraden Holmen. Verjüngungen werden erst nach einer Gewebefixierung am Endholm bespannt. Das Gewebe wird um den Nasenholm der zu bespannenden Struktur gewickelt und angebügelt (Fig. 2). Im Bereich von Verjüngungen wird die Umschlingung am Nasenholm gegebenenfalls auf 270° reduziert. Rundungen wie Randbögen werden mit dem Bügeleisen angebügelt. Da sich das Gewebe durch die Hitze gut verstrecken lässt, muss es beim Anbügeln mit der anderen Hand um die Struktur herumgezogen werden. Auftretende Falten werden durch erhöhte Hitze weggeschrumpft.

Um den Bereich des Endholms wird das Gewebe in einem Winkel von ca. 270° angebügelt, um eine möglichst große Ankerfläche zu haben. Auch die übrigen äußeren Rohre werden 270° umbügelt. Beim Aufbügeln der Oberseite erfolgt eine Bebügelung der äußeren Struktur mit einer 180° Umschlingung der Holme. Außer beim Seitenleitwerk wird wie bei Höhenleitwerk, Tragfläche und allen Klappen die "Unterseite" zuerst bespannt.

Um zu verhindern, dass beim Umbügeln der Rohrkonstruktion Gewebe gegeneinander verklebt, wird auf die Innenseite der Fläche des zu umbügelten Rohres zusätzlich zur Strukturübertragung Silikonpapier gelegt.

Jetzt wird das Seitenleitwerk zur Bespannung vorbereitet. Dazu wird es auf der Gewebeinnenseite positioniert und mit einem Zirkel im Außenbereich umrundet. Der Abstand der Zirkelmarkierung zum Rohr beträgt für die erste zu bespannende Seite den Rohrumfang + 75 % am Nasenrohr und am Endrohr 80 % des Rohrumfanges. Für die Gegenseite beträgt er etwa 40 % des Rohrumfanges. Dann wird das Seitenleitwerk gedreht und die Gegenseite wird aufgezeichnet. Anschließend werden die beiden Seitenleitwerksbespannungen mit Kleber eingestrichen, wobei die Zirkelmarkierung die äußere Begrenzung der Kleberbeschichtung darstellt. Es ist darauf zu achten, dass alle Bereiche des Gewebes, mit denen es auf der Struktur aufliegt mit Kleber beschichtet werden, um einen sicheren, festen Sitz zu gewährleisten. Nach dem Trocknen erfolgt der Zuschnitt mit einem Übermaß von ca. 10-15 cm entlang der äußeren Zirkellinie. Das Anbügeln erfolgt nach der beschriebenen Methode.

Nach dem Anbügeln des Teils, welcher dem Rohr direkt aufliegt, wird in dem Bereich, in dem Gewebeschicht auf Gewebeschicht liegt, Dispersionsheißkleber aufgetragen. Nach dem Trocknen wird die Außenseite angebügelt. Die Bespannung wird 180° um die Rohrkonstruktion herumgebügelt und an dem Endrohr mit einer 280° Umschlingung angebügelt. Im Bereich von Rundungen auftretende Falten lassen sich mit Wärme wegschrumpfen. Falls nicht alle Falten verschwinden, wird mit dem Heißluftgebläse und höherer Temperatur nachgeschrumpft und gezogen, bis die Falten verschwunden sind. Bei dieser Arbeit ist das Gewebe nach dem Entfernen des Heißluftgebläses noch einen Augenblick festzuhalten, damit der Kleber erkalten kann und er das Gewebe auf dem Untergrund verankert.

Falten, die nach dem Verbügeln der Bespannung noch vorhanden sind, werden mittels eines Heißluftgebläses bei einer Temperatureinstellung von 350°C entfernt. Die Temperatur der auf das Gewebe auftreffenden Luft wird über den Abstand zum Gewebe "gesteuert": je mehr Abstand, desto kälter ist die Temperaturbeaufschlagung. Zur Kontrolle beim Schrumpfen wird die Oberflächentemperatur mit einem Infrarotthermometer gemessen. Sie sollte 200° nicht überschreiten. Um beim Anpressen des Gewebes an die Struktur die Finger nicht zu verbrennen, nimmt man am besten einen Filzrakel. Um die Oberseite sauber auf die Unterseite zu bügeln, werden beim Seitenleitwerk auf der Rohrmitte Hilfspunkte markiert. Das Gewebe wird entsprechend der Markierung zugeschnitten und angebügelt.

Im Bereich von Biegungen werden Unebenheiten der Oberseite mit erhöhter Hitze weggebügelt und weggeschrumpft. An geraden Nahtstellen, an denen ein Schrumpf nicht erforderlich ist, wird bei ca. 90-100°C gebügelt (Holzkonstruktionen). Bei Metallkonstruktionen können, aufgrund der hohen Leitfähigkeit, Temperaturen von 130 bis 170°C angemessen sein. Um saubere Übergänge zu erhalten, zieht man mit Hilfe eines Zirkels immer Hilfslinien, die als Schnittkante dienen. Die innere Hilfslinie dient dazu, dass der Kleber nur in dem Bereich aufgetragen wird, indem er benötigt wird.

Um zu verhindern, dass sich das Gewebe verschiebt, wird es um die Struktur gelegt und mit Klebeband fixiert. Nachdem das Gewebe zugeschnitten ist, wird es angebügelt. An Radien, wie Randbögen, wird das Gewebe mit erhöhter Wärme angebügelt und festgeschrumpft.

Die Beschriftung kann mit einer Spezialfolie erfolgen, die nach der Kaltverklebung mit ca. 80 °C nachgebügelt wird.

### Ausführungsbeispiel 2:

### Bespannen von Tragflächen

Die Tragfläche wird in der Vorgehensweise analog zu der bei den Leitwerken erläuterten Technik bespannt. Zuerst wird die Struktur der Tragfläche auf die Innenseite des Gewebes übertragen. Praktischerweise überträgt man die komplette Struktur der Tragflächenober- und Unterseite auf die ausgerollte Gewebebahn. Diese wird dann im markierten Bereich mit Kleber eingestrichen. Parallel dazu wird ein Streifen mit Kleber eingestrichen, der anschließend zerschnitten wird, wobei die so erhaltenen Patches überall dort aufgebracht werden, wo Nieten sind, zum Beispiel über die Rippenaufleimer. Alle aufgebrachten Patches werden dann auf der Oberseite mit Kleber eingestrichen. Nach dem Trocknen des Klebers wird zuerst die Unterseite, dann die Oberseite der Tragflächen bespannt. Auch beim Bespannen geht man zweckmäßigerweise so vor, dass man am Nasenholm beginnt und die Bespannung den Nasenholm dabei umschlingt. An den Stellen, an denen Gewebe auf Gewebe liegt, wird Dispersionsheißkleber aufgetragen. Nach der Trocknung wird das Gewebe straff zum Endholm gezogen und dort ebenfalls angebügelt. Die Umschlingung des Endholms sollte mindestens 270° betragen. Nach Abschluss dieser Arbeit wird die Tragfläche umgedreht und die Tragflächenoberseite wird wie bereits beschrieben bespannt. Dabei ist darauf zu achten, dass besonders bei Hindernissen sorgfältig angebügelt wird. An der Wurzelrippe und am Randbogen wird das Gewebe sauber um oder in die Wurzelrippe gebügelt, um eine maximale Ankerfläche für den Kleber und das Gewebe zu erhalten. Durchbrüche werden mit einem auf der Innen- und Außenseite anzubringenden runden Verstärkungsflicken gesichert. Nach Abschluss des Bügelvorganges werden verbleibende Falten am Rohr werden mit erhöhter Hitze durch das Heißluftgebläse weggeschrumpft. Wenn mit dem Heißluftgebläse gestrafft wird, empfiehlt es sich, Nahtstellen mit einem Streifen aus Wellpappe abzudecken, damit der Kleber durch die hohe Temperatur wieder erweicht und sich das Gewebe beim Schrumpfen "wegzieht". Da beim Schrumpfen nicht alle Stellen gleichmäßig mit Wärme beaufschlagt werden, ist dieser Vorgang 1-2 mal zu wiederholen. Überlappungen sind mindestens 5 cm breit auszuführen (Nasenholm, Endholm).

### Ausführungsbeispiel 3:

### Bespannen des Rumpfes

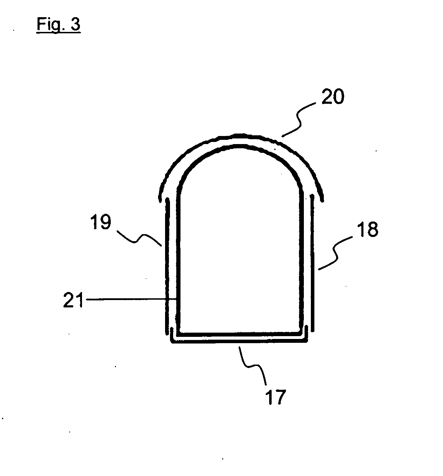

Der Rumpf wird analog zur Tragfläche bespannt. Das Vorgehen entspricht dem Bespannschema nach Fig. 3. Zum Bespannen des Rumpfes kann entweder mit dem Rumpf selbst, oder peripher mit dem Fahrwerk begonnen werden. Ein Grobzuschnitt des Gewebes wird an der Unterseite des Fahrwerkes fixiert, z.B. mit Kreppband, und alle Kontaktflächen von Fahrwerk und Gewebe werden markiert. Auch die äußeren Schnittlinien werden eingezeichnet, wobei das Rohr in einem Winkel von 270° umtucht werden sollte. Alle Kontaktstellen, d.h. sowohl die des Gewebes, als auch die des Fahrwerkes werden mit Dispersionsheißkleber eingestrichen. Zweckmäßiger Weise beginnt man mit der Bespannung an der Unterseite des Fahrwerkes. Nach dem Trocknen des Klebers wird das Gewebe zugeschnitten und aufgebügelt. Wie schon unter 1. beschrieben wird an allen Knotenpunkten Kleber aufgetragen. Nach dem Trocknen wird ein mit Kleber bestrichenes Gewebe als Patch aufgebügelt, um zu verhindern das die eigentliche Bespannung durch scharfe Kanten beschädigt wird.

Der Dispersionsheißkleber muss komplett durchgetrocknet sein, bevor bespannt werden kann. Dieser Vorgang lässt sich mit dem Heißluftgebläse auf Kaltlufteinstellung durchaus beschleunigen. Hierbei ist allerdings unbedingt darauf zu achten, dass dies auch wirklich mit kalter Luft geschieht. Der Härter ist bereits in dem Dispersionskleber enthalten ist und reagiert ab einer Temperatur von ca. 50°C mit dem Kleber. Das bedeutet, wenn der Prozess einmal gestartet wurde, härtet der Kleber aus und ist danach nicht mehr zum Verkleben des Gewebes geeignet.

Die Bespannung der Außenseite des Fahrwerkes erfolgt analog zur Unterseite. Dabei ist darauf zu achten, dass die Überlappungsnaht (Gewebe - Gewebe) vor dem Bespannen mit Dispersionsheißkleber eingestrichen wird. Zur Erzielung sauberer Nähte klebt man diese mit Klebeband ab. Das Klebeband wird noch vor dem Trocknen des Klebers entfernt. Alle Stöße und Öffnungen werden mit einem aufbügelbaren Zackenband verstärkt. Auch schwierige Stellen lassen sich gut bearbeiten.

Die Rumpfbespannung sollte aus möglichst wenigen Einzelteilen bestehen, um wenig Stöße und Nähte zu haben. Zuerst wird die Rumpfunterseite bespannt. Dabei muss das Gewebe die seitlichen Rumpfgurte in einem Winkel von ca. 270° umschlingen. Anschließend wird die rechte Rumpfseite komplett an einem Stück am Rumpf mit Klebeband fixiert. Die Struktur wird auf das Gewebe übertragen. Der Struktursitz auf dem Gewebe und die Rumpfstruktur werden mit Dispersionsheißkleber bestrichen und trocknen gelassen. Danach wird das Gewebe von vorne nach hinten mit dem Bügeleisen angebügelt. Auf diese Weise lassen sich auch schwierige Stellen am Rumpf gut eintuchen.

### Ausführungsbeispiel 4:

### Herstellung des Dispersionsklebers

### Herstellung der Härterlösung

In 100 g Wasser wird unter langsamen Rühren 0,7 g Dispergier- und Stabilisierungsmittel, 0,5 g Emulgator und 3,1 g Härter auf Basis des Polyetheramins gegeben. Nach Homogenisierung dieser Bestandteile in der Lösung werden 67 g des pulverförmigen Härters auf Basis des aliphatischen Polyisocyanates portionsweise eindispergiert. Dabei dürfen keine Klümpchen entstehen. Die Lösung wird bis zur Homogenisierung schonend gerührt.

### Einmischen der Härterlösung in das Bindemittel

100 g des Bindemittels wird vorgelegt und dazu 0,3 g des Verdickers eingerührt. Nach Homogenisierung werden 15 g der Härterlösung unter langsamen Rührens hinzugefügt.

### Konditionierung der Klebstofflösung

Die Klebstofflösung wird langsam weiter gerührt bis der sich bildende Schaum verschwunden ist. Diese Klebstofflösung wird zum Schluss noch gefiltert.

### Bezugszeichen

- **11**: Oberseite (eines zu bespannenden Flugzeugteils)
- **12**: Unterseite (eines zu bespannenden Flugzeugteils)
- **13**: Nasenholm
- **14**: Endholm
- **15**: Klebstoff-Beschichtung
- **16**: Gewebeinnenseite
- **17**: Bespanngewebe der Rumpfunterseite
- **18**: Bespanngewebe der rechten Rumpfseite
- **19**: Bespanngewebe der linken Rumpfseite
- **20**: Bespanngewebe der Rumpfoberseite
- **21**: Rumpf

## Patentansprüche

1. Verfahren zum Bespannen von Leichtflugzeugen und/oder Teilen davon, bestehend aus einem Rahmensystem, wobei der Rahmen oder Teile des Rahmens mit einem Polyester-Bespanngewebe umspannt werden, wobei das Bespanngewebe eine Längs-Schrumpfung von 5 - 8%, bevorzugt 7% und eine Quer-Schrumpfung von 4 - 6%, bevorzugt 5% bei 160 - 180°C aufweist, umfassend die folgenden Verfahrensschritte,
a) wobei das Bespanngewebe im Bereich seiner Überhänge und Teile des Rahmes, auf denen das Bespanngewebe zu liegen kommt, mit einem Dispersionsheißkleber bestrichen wird, wobei der Kleber eine Härterkomponente enthält, die nach Erreichen der Verarbeitungstemperatur von > 40°C auspolymerisiert, und
b) wobei das Bespanngewebe um Holmenteile des Rahmens derart verwickelt ist, dass bei einer Lösung der durch den Kleber hergestellten Verbindung zwischen Bespanngewebe und Rahmen das Bespanngewebe am Rahmengestell gehalten wird.

2. Verfahren zum Bespannen von Leichtflugzeugen und/oder Teilen davon, nach Anspruch 1 wobei die Härterkomponente des Dispersionsheißklebers bei Verarbeitungstemperaturen von 40° bis 60°C auspolymerisiert.

3. Verfahren zum Bespannen von Leichtflugzeugen und/oder Teilen davon, nach Anspruch 1 oder 2, wobei der Dispersionsheißkleber 80 - 88% Bindemittel, 12 - 15% Härterkomponente und 0,15 - 0,3% Verdicker umfasst.

4. Verfahren zum Bespannen von Leichtflugzeugen und/oder Teilen davon nach einem der vorhergehenden Ansprüche, wobei die Härterkomponente 54-60% Lösungsmittel, 0,35 - 0,5% Stabilisierungsmittel auf Basis eines Natriumsalzes der Naphtalensulfonsäure, 0,25 - 0,35% Emulgator auf Basis eines propoxyliertem Alkohol, 1,7 - 1,9% Härter auf Basis eines Polyetheramines, 37 - 41 % Polyisocyanat umfasst.

5. Verfahren zum Bespannen von Leichtflugzeugen und/oder Teilen davon, nach mindestens einem der vorhergehenden Ansprüche, **dadurch gekennzeichnet, dass**
a) für die Bespannung von Leitwerken das Bespanngewebe dergestalt zugeschnitten wird, dass der Überhang (A) der Schnittkante zum Nasenholm des zu bespannenden Leitwerkes (A = π · d · x) beträgt sowie (A = π · d · y) vom Endholm desselben Leitwerkes, wobei d der Durchmesser des mit Bespanngewebe zu umschlingenden Rohres (in cm) ist, und x = 1,5 bis 2,0, bevorzugt 1,75 und y = 0,55 bis 1,05, bevorzugt 0,8, und
b) die Unterseite des Leitwerkes eingetucht wird, indem der Nasenholm mit etwa 1,75 Umrundungen (550° bis 700°) des mit Kleber bestrichenen Teils des Bespanngewebes umschlungen und dieser Teil angebügelt wird und anschließend der Endholm mit einer etwa 0,75 Umrundung (200° bis 350°) des ebenso mit Kleber bestrichenen Teils des Bespanngewebes umschlungen und dieser Teil in derselben Weise angebügelt wird, gefolgt vom
c) Eintuchen der Oberseite des Leitwerkes, indem der Nasenholm, etwa mit 0,5 Umrundung (150° bis 210°) des mit Kleber bestrichenen Teils des Bespanngewebes umschlungen wird, und das Bespanngewebe angebügelt wird, während der Endholm anschließend mit weniger als 0,5 Umrundung (120° bis 170°) des ebenso mit Kleber bestrichenen Teils des Bespanngewebes umschlungen und das Bespanngewebe in derselben Weise angebügelt wird.

6. Verfahren zum Bespannen von Leichtflugzeugen und/oder Teilen davon, nach mindestens einem der vorhergehenden Ansprüche, wobei anschließend das Bespanngewebe geschrumpft wird, indem es ein- bis zweimal mittels eines Heißluftgebläses bei einer Temperatureinstellung von 280°C bis 380°C, Bevorzugt 350°C auf etwa 200°C erhitzt wird, wobei die tatsächliche Temperatur am Gewebe über den Abstand des Gebläses gesteuert wird.

7. Verfahren zum Bespannen von Leichtflugzeugen und/oder Teilen davon, nach mindestens einem der vorhergehenden Ansprüche, wobei vor dem Eintuchen Patches ebenfalls mit dem Dispersionsheißkleber bestrichen und nach dessen Trocknung zum Schutz des abschließenden Bespanngewebes auf Nieten und Knotenbleche aufgebügelt werden.

8. Verfahren zum Bespannen von Leichtflugzeugen und/oder Teilen davon, nach mindestens einem der Ansprüche 1 bis 7, **dadurch gekennzeichnet, dass** das Anbügeln von Bespanngewebe und/oder der Patches bei Holzkonstruktionen mit einer Temperatur von 70°C bis 110°C, bevorzugt 90°C erfolgt.

9. Verfahren zum Bespannen von Leichtflugzeugen und/oder Teilen davon, nach mindestens einem der Ansprüche 1 bis 7, **dadurch gekennzeichnet, dass** das Anbügeln von Bespanngewebe und/oder der Patches bei Metallkonstruktionen mit einer Temperatur von etwa 130°C bis 170°C erfolgt.

10. Verfahren zum Bespannen von Leichtflugzeugen und/oder Teilen davon, nach mindestens einem der vorhergehenden Ansprüche, **dadurch gekennzeichnet, dass** Nähte mit einem Zackenband aus Bespanngewebe versiegelt werden, das mit einem Dispersionsheißkleber gemäß der Ansprüche 12 oder 13 bestrichen ist und anschließend bei 60°C bis 100°C, bevorzugt 90°C auf die Naht aufgebügelt wird.

11. Verfahren zum Bespannen von Leichtflugzeugen und/oder Teilen davon, nach mindestens einem der vorhergehenden Ansprüche, **dadurch gekennzeichnet, dass** eine Beschriftung der bespannten Flächen mit Polyester-Farbfolie mittels Kaltverklebung und Nachbügeln bei 60°C bis 100°C, bevorzugt 80°C erfolgt.

12. Verwendung eines Dispersionsheißkleber zum Bespannen von Leichtflugzeugen und/oder Teilen davon in einem Verfahren nach mindestens einem der vorhergehenden Ansprüche, **dadurch gekennzeichnet, dass** der Dispersionsheißkleber 80 - 88% Bindemittel, 12 - 15% Härterkomponente und 0,15 - 0,3% Verdicker umfasst, wobei der Kleber bei Temperaturen von > 40°C auspolymerisiert.

13. Verwendung eines Dispersionsheißkleber zum Bespannen von Leichtflugzeugen und/oder Teilen davon nach dem vorhergehenden Anspruch, wobei die Härterkomponente 54 - 60% Lösungsmittel, 0,35 - 0,5% Stabilisierungsmittel auf Basis eines Natriumsalzes der Naphtalensulfonsäure, 0,25 - 0,35% Emulgator auf Basis eines propoxyliertem Alkohol, 1,7 - 1,9% Härter auf Basis eines Polyetheramines, 37 - 41% Polyisocyanat umfasst.

14. Leichtflugzeug oder ein Teil desselben, **dadurch gekennzeichnet dass** dieses mit einem Polyester-Bespanngewebe mittels eines Verfahrens nach wenigstens einem der Ansprüche 1 bis 11 bespannt ist.

## Claims

1. Method for covering light aircraft and/or parts thereof, comprising a frame system, whereby the frame or parts thereof are covered with a polyester fabric covering, whereby the fabric covering has a longitudinal shrinkage of 5 - 8%, preferably 7%, and a horizontal shrinkage of 4 - 6%, preferably 5%, at 160 - 180°C comprising the following method steps:
a) whereby the fabric covering is coated with a dispersion hot-melt adhesive in the sections of its overhangs and parts of the frame upon which the fabric covering comes to rest, whereby the adhesive contains a hardening component that polymerizes after reaching a processing temperature of > 40°C and
b) whereby the fabric covering is wound around the spars of the frame in such a way that if the adhesive connection between the fabric covering and frame is disengaged, the fabric covering is retained on the frame.

2. Method for covering light aircraft and/or parts thereof according to Claim 1, whereby the hardening component of the dispersion hot-melt adhesive polymerizes at a processing temperature of 40° to 60°C.

3. Method for covering light aircraft and/or parts thereof according to claim 1 or 2, whereby the dispersion hot-melt adhesive comprises 80 - 88% binding agent, 12 - 15% hardening component and 0.15-0.3% thickener.

4. Method for covering light aircraft and/or parts thereof according to one of the preceding claims, whereby the hardening component comprises 54 - 60% solvent, 0.35 - 0.5% stabilizing agent on the basis of a sodium salt of naphthalene sulfonic acid, 0.25 - 0.35%, emulsifier on the basis of a propoxylated alcohol, 1.7 - 1.9% hardener on the basis of a polyether amine, [and] 37 - 41 % polyisocyanate.

5. Method for covering light aircraft and/or parts thereof, according to at least one of the preceding claims, **characterized in that**
a) for covering structural elements, the fabric covering is cut to measure in such a way that the overhang (A) of the cut edge with respect to the nose spar of the structural unit that is to be covered amounts to (A = π • d • x) in addition to (A = π • d • y) from the end spar of the same structural element, whereby d is the diameter of the pipe that is to be surrounded by fabric covering (in cm) and x = 1.5 to 2.0, preferably 1.75 and y = 0.55 to 1.05, preferably 0.8, and
b) the underside of the structural element is covered with fabric by surrounding the nose spar approximately 1.75 times (550° to 700°) with that part of the fabric covering that has been coated with adhesive, and this part is ironed on, and subsequently the end spar is surrounded approximately 0.75 times (200° bis 350°) with the part of covering fabric that has likewise been coated with adhesive, and this part is ironed on in the same manner, followed by,
c) covering the upper side of the structural element with fabric by surrounding the nose spar approximately 0.5 times (150° to 210°) with the part of the covering fabric that is coated with adhesive and the covering fabric is ironed on, while the end spar is subsequently surrounded less than 0.5 times (120° bis 170°) with the likewise adhesive-coated part of the covering fabric and the covering fabric is ironed on in the same way.

6. Method for covering light aircraft and/or parts thereof, according to at least one of the preceding claims, whereby the fabric covering is subsequently shrunk by being heated to approximately 200°C once or twice using a hot hear blower at a temperature setting of 280°C to 380°C, preferably 350°C, whereby the actual temperature at the fabric is controlled by the distance from the blower.

7. Method for covering light aircraft and/or parts thereof according to at least one of the preceding claims, whereby prior to being covered with fabric, patches are likewise coated with dispersion hot-melt adhesive and after the adhesive has dried, they are ironed onto rivets and gusset plates to protect the finishing fabric covering.

8. Method for covering light aircraft and/or parts thereof, according to at least one of claims 1 to 7, **characterized in that** the ironing on of covering fabric and/or the patches is carried out at a temperature of 70°C to 110°C for wood designs, preferably at 90°C.

9. Method for covering light aircraft and/or parts thereof, according to at least one of claims 1 to 7, **characterized in that** the ironing on of covering fabric and/or the patches is carried out at a temperature of 130°C to 170°C for metal designs.

10. Method for covering light aircraft and/or parts thereof, according to at least one of the preceding claims, **characterized in that** seams are sealed with a serrated band of fabric covering that is coated with a dispersion hot-melt adhesive according to claims 12 or 13 and is subsequently ironed onto the seam at 60°C to 100°C, preferably 90°C.

11. Method for covering light aircraft and/or parts thereof, according to at least one of the preceding claims, **characterized in that** a labelling of the surfaces covered with polyester color film occurs by means of cold adhesion and subsequent ironing at 60°C to 100°C, preferably 80°C.

12. Use of a dispersion hot-melt adhesive for covering light aircraft and/or parts thereof in a method according to at least one of the preceding claims, **characterized in that** said dispersion hot-melt adhesive comprises 80 - 88% binding agent, 12 - 15% hardening component and 0.15 - 0.3% thickener, whereby the adhesive polymerizes at temperatures of > 40°C.

13. Use of a dispersion hot-melt adhesive for covering light aircraft and/or parts thereof according to the preceding claim, wherein the hardening component comprises 54 - 60% solvent, 0.35 - 0.5% stabilizing agent on the basis of a sodium salt of naphthalene sulfonic acid, 0.25-0.35% emulsifier on the basis of propoxylated alcohol, 1.7 - 1.9% hardener on the basis of a polyether amine, [and] 37 - 41% polyisocyanate.

14. Light aircraft or a part of such, **characterized in that** it is covered with a polyester fabric covering by means of a method according to at least one of claims 1 to 11.

## Revendications

1. Procédé d'entoilage d'avions légers et/ou de parties d'avions légers, constitués d'un système de cadre, le cadre ou des parties du cadre étant entourés avec une toile d'entoilage en polyester, la toile d'entoilage présentant un retrait longitudinal de 5-8%, de préférence 7%, et un retrait transversal de 4-6%, de préférence 5%, à 160-180°C, comprenant les étapes de procédé suivantes :
a) la toile d'entoilage est enduite d'un adhésif à chaud en dispersion dans la zone de ses excédents et des parties du cadre sur lesquelles la toile d'entoilage vient s'appuyer, l'adhésif contenant un composant durcisseur qui se polymérise lorsque la température de traitement, supérieure à 40°C, est atteinte,
b) la toile d'entoilage est enroulée autour de parties en bois du cadre de telle sorte qu'en cas de dissolution de la liaison obtenue grâce à l'adhésif entre la toile d'entoilage et le cadre, la toile d'entoilage est maintenue sur la structure de cadre.

2. Procédé d'entoilage d'avions légers et/ou de parties d'avions légers selon la revendication 1, le composant durcisseur de l'adhésif à chaud en dispersion se polymérisant à des températures de traitement de 40°C à 60°C.

3. Procédé d'entoilage d'avions légers et/ou de parties d'avions légers selon la revendication 1 ou 2, l'adhésif à chaud en dispersion comprenant 80-88% de liant, 12-15% de composant durcisseur et 0,15-0,3% d'épaississant.

4. Procédé d'entoilage d'avions légers et/ou de parties d'avions légers selon l'une des revendications précédentes, le composant durcisseur comprenant 54-60% de solvant, 0,35-0,5% de stabilisant à base d'un sel de sodium de l'acide naphtalène-sulfonique, 0,25-0,35% d'émulsifiant à base d'un alcool propoxylé, 1,7-1,9% de durcisseur à base d'une polyétheramine, 37-41 % de polyisocyanate.

5. Procédé d'entoilage d'avions légers et/ou de parties d'avions légers selon au moins une des revendications précédentes, **caractérisé en ce que**
a) pour l'entoilage d'empennages, la toile d'entoilage est découpée de telle sorte que l'excédent (A) de l'arête de coupe jusqu'au longeron de nez de l'empennage à entoiler mesure (A = π . d . x), et (A = π . d . y) jusqu'au longeron d'extrémité du même empennage, d étant le diamètre (en cm) du tube autour duquel la toile d'entoilage doit être enroulée, et x = 1,5 à 2,0, de préférence 1,75, et y = 0,55 à 1,05, de préférence 0,8,
b) on enveloppe le côté inférieur de l'empennage avec la toile en faisant faire à la partie de la toile d'entoilage enduite d'adhésif environ 1,75 fois (550° à 700°) le tour du longeron de nez et en repassant cette partie et en faisant faire ensuite à la partie de la toile d'entoilage également enduite d'adhésif environ 0,75 fois (200° à 350°) le tour du longeron d'extrémité et en repassant cette partie de la même manière et, ensuite,
c) on enveloppe le côté supérieur de l'empennage avec la toile en faisant faire à la partie de la toile d'entoilage enduite d'adhésif environ 0,5 fois (150° à 210°) le tour du longeron de nez et en repassant la toile d'entoilage, tandis que l'on fait faire ensuite à la partie de la toile d'entoilage également enduite d'adhésif moins de 0,5 fois (120° à 170°) le tour du longeron d'extrémité et on repasse la toile d'entoilage en procédant de même.

6. Procédé d'entoilage d'avions légers et/ou de parties d'avions légers selon au moins une des revendications précédentes, la toile d'entoilage étant ensuite rétractée en la chauffant une à deux fois à environ 200°C au moyen d'un pistolet à air chaud réglé à une température entre 280°C et 380°C, de préférence 350°C, la température effective au niveau de la toile étant commandée par le biais de la distance du pistolet.

7. Procédé d'entoilage d'avions légers et/ou de parties d'avions légers selon au moins une des revendications précédentes, des morceaux de toile étant également enduits de l'adhésif à chaud en dispersion, avant l'enveloppement par la toile, et étant posés et repassés sur les rivets et les goussets, une fois l'adhésif sec, pour protéger la toile d'entoilage qui clôture l'ensemble.

8. Procédé d'entoilage d'avions légers et/ou de parties d'avions légers selon au moins une des revendications 1 à 7, **caractérisé en ce que** le repassage de la toile d'entoilage et/ou des morceaux de toile s'effectue à une température de 70°C à 110°C, de préférence 90°C, pour les constructions en bois.

9. Procédé d'entoilage d'avions légers et/ou de parties d'avions légers selon au moins une des revendications 1 à 7, **caractérisé en ce que** le repassage de la toile d'entoilage et/ou des morceaux de toile s'effectue à une température d'environ 130°C à 170°C pour les constructions en métal.

10. Procédé d'entoilage d'avions légers et/ou de parties d'avions légers selon au moins une des revendications précédentes, **caractérisé en ce que** les coutures sont scellées au moyen d'une bande crantée en toile d'entoilage qui est enduite d'un adhésif à chaud en dispersion selon les revendications 12 ou 13 et, ensuite, posée et repassée sur la couture à une température de 60°C à 100°C, de préférence 90°.

11. Procédé d'entoilage d'avions légers et/ou de parties d'avions légers selon au moins une des revendications précédentes, **caractérisé en ce qu'**une inscription sur les surfaces entoilées à l'aide d'une feuille colorée en polyester est réalisée au moyen d'un collage à froid suivi d'un repassage à une température de 60°C à 100°C, de préférence 80°C.

12. Utilisation d'un adhésif à chaud en dispersion pour l'entoilage d'avions légers et/ou de parties d'avions légers dans un procédé selon au moins une des revendications précédentes, **caractérisé en ce que** l'adhésif à chaud en dispersion comprend 80-88% de liant, 12-15% de composant durcisseur et 0,15-0,3% d'épaississant, l'adhésif se polymérisant à des températures supérieures à 40°C.

13. Utilisation d'un adhésif à chaud en dispersion pour l'entoilage d'avions légers et/ou de parties d'avions légers selon la revendication précédente, le composant durcisseur comprenant 54-60% de solvant, 0,35-0,5% de stabilisant à base d'un sel de sodium de l'acide naphtalène-sulfonique, 0,25-0,35% d'émulsifiant à base d'un alcool propoxylé, 1,7-1,9% de durcisseur à base d'une polyétheramine, 37-41% de polyisocyanate.

14. Avion léger ou partie d'un avion léger, **caractérisé en ce qu'**il/elle est entoilé/e avec une toile d'entoilage en polyester grâce à un procédé selon au moins une des revendications 1 à 11.
